Europäisches Patentamt

European Patent Office

Office européen des brevets

(19)

(11) EP 1 514 658 A1

(12) **EUROPEAN PATENT APPLICATION**

(43) Date of publication:
16.03.2005 Bulletin 2005/11

(51) Int Cl.⁷: **B29B 9/08**, C08J 3/12, C08J 3/16, C08J 3/205

(21) Application number: 04254773.7

(22) Date of filing: 07.08.2004

(84) Designated Contracting States:
**AT BE BG CH CY CZ DE DK EE ES FI FR GB GR HU IE IT LI LU MC NL PL PT RO SE SI SK TR**
Designated Extension States:
**AL HR LT LV MK**

(30) Priority: **21.08.2003 EP 03290261**

(71) Applicant: **Rohm and Haas Company**
**Philadelphia, Pennsylvania 19106-2399 (US)**

(72) Inventors:
• **Chang, Ching-Jen**
**Ambler, Pennsylvania 19002 (US)**
• **Coyle, Robert William**
**Warrington, Pennsylvania 18976 (US)**
• **Guo, Hailan**
**Warrington, Pennsylvania 18976 (US)**
• **Jones, Charles Elwood**
**Yardley, Pennsylvania 19067 (US)**
• **Ugazio, Stephen Pierre Jean**
**06530 Cabris, (FR)**

(74) Representative: **Buckley, Guy Julian**
**ROHM AND HAAS (UK) LTD.**
**European Operations Patent Department**
**28th Floor,City Point**
**One Ropemaker Street**
**London EC2Y 9HS (GB)**

(54) **Process for manufacturing polymers**

(57) The present invention relates to a process for preparing dry polymer granules, particles and powders having increased minimum ignition energy, lowered to unchanged maximum explosion pressure, lowered explosion strength (Kst) coupled with reduced dusting levels by coagulating one or more emulsion polymers using one or more cationic surfactants including one or more other coagulating agents, filtering the coagulated slurry and drying the coagulated slurry.

EP 1 514 658 A1

## Description

The present invention relates to a process for preparing dried granules of dispersable polymers. More particularly, the invention is directed to a manufacturing process for preparing dry polymer granules, the dried polymer granules having utility in preparing compositions and formulations that are applied to an environment of use.

The primary reasons for granulating polymers are to improve rheology (*e.g.* flow and deformation properties) of the polymer granules and reduce dust levels due to attrition of the polymer during processing, handling, conveying and storage. Significant dusting problems are associated with certain polymer powders. Highly cross-linked polymers and core shell polymers (*e.g.* opaque polymers) having a "hard" shell tend to be more friable and exhibit significant dusting as solids. The friability of such polymer solids is magnified by low density polymer granules and polymers having primary powder particle sizes less than 75 µm prepared by spray drying latex particles having primary particle sizes less than 1 µm. Spray drying of such polymers present serious safety issues, including drying equipment venting and grounding, that are related to a combination of factors including significant dust levels in the polymer solids, low thermal stability of the polymer, low minimum ignition energy (MIE), high maximum explosion pressure (MEP) and significant explosivity strength (Kst). Indeed, it is the dusting issue which is of primary concern to polymer manufacturers, processors, formulators and process operators. The presence of even a low quantity of dust in the atmosphere of a factory poses a significant combustion/explosion risk and may provide a health risk to workers in contact with such polymers.

European Patent Publication No. EP 1 096 025 A1 discloses a process for rendering leather processing solids less dusting by adding a pre-determined amount of a solid leather treatment composition into a pre-determined amount of an aqueous diluent or carrier. Such solids include homopolymers of acrylic acid and copolymers comprising more than 50 wt. % of polymerized acrylic acid and basic salts thereof; polymers which are inherently hygroscopic. While such hygroscopic polymers reduce dusting of solid leather treatments they have no utility in reducing dusting of dried latex polymer particles containing a void and having a particle size from 50 to 1000 nanometers. In particular, the process does not significantly reduce the dusting problem associated with dried latex polymer particles including those comprising a shell portion prepared as described in U. S. Patent No. 6,384,104.

Inventors have discovered a manufacturing process for preparing polymeric granules that are comparatively non-dusting solids, that are flowable powders, and that have desired rheology and mechanical properties for incorporating into compositions and formulations including those used in personal care, cosmetic, consumer, and pharmaceutical products. The process comprises coagulating dispersions of emulsion polymers with coagulants including surfactants followed by filtration and drying of the coagulated polymer granules. The process provides non-dusting polymer solids that are flowable, having desirable powder properties, rheology and that exhibit increased particle size. Moreover, the dry granulated solids exhibit lowered or unchanged MEP and lowered Kst values such that they can be safely processed, manipulated and stored.

Accordingly, the invention provides a process for manufacturing a dry polymer composition having reduced dusting comprising the steps of: (a) coagulating one or more emulsion polymers with one or more cationic surfactants and (b) drying the coagulate.

Moreover, the invention provides a process for preparing flowable, dry polymer solids having reduced dusting comprising: coagulating one or more emulsion polymers with one or more cationic surfactants and drying the coagulate; wherein the dry polymer solids have increased particle size, increased MIE, lowered or unchanged MEP and lowered Kst values.

The invention also provides a dry polymer composition having reduced dusting comprising: (a) one or more emulsion polymers and (b) one or more cationic surfactants; wherein the polymer composition is prepared by coagulating a dispersion comprising (a) and (b); and drying the coagulate.

Polymers usefully employed in accordance with the invention are aqueous emulsion polymers. Suitable polymers include, but are not limited to, latex polymer particles. Latex particles useful in the method of this invention are latex particles that include voids and that are formed from a multi-staged particle comprising at least one core polymer and at least one shell polymer. The core polymer and shell polymer may be made in a single polymerization step or in a sequence of polymerization steps. Latex particles that include voids are also referred to as hollow sphere latex particles. Latex particles that include voids are also referred to as core shell latex polymers, wherein the core polymer is swellable with at least one swelling agent (also referred to as swellant) including solvents, water and aqueous bases, is swollen with at least one swelling agent, wherein the core is a void comprising water and wherein the void comprises at least one swelling agent. For the purposes of the present invention, the terms, "sheath" and "shell" are considered synonymous and refer to the total shell polymer composition (not including the core portion) prepared from single or multi-stage polymerizations. The emulsion polymers are prepared as dispersions, typically as aqueous dispersion.

According to one embodiment, suitable polymers include latex polymer particles having selected cross-linker levels used in a shell portion of the latex polymer particles that are based on: (1) monomeric compositions containing polyethylenically unsaturated monomers, (2) monomeric compositions containing multifunctional monomers having at least one functional group capable of vinyl copolymerization and at least one functional group capable of reaction with suitable reactive molecules to produce post-polymerization cross-linking, and (3) combinations thereof.

The latex polymer particles usefully employed in the invention have a particle size from 20 to 1000 nanometers (nm) (or 0.02 to 1 micron, $\mu$m), including particles sizes from 100 to 600 nm (0.1 to 0.6 $\mu$m), from 200 to 500 nm (0.2 to 0.5 $\mu$m), and from 300 to 400 nm (0.3 to 0.4 $\mu$m), as measured by a Brookhaven BI-90 photon correlation spectrometer.

For a given particle size, it is desirable to produce latex polymer particles with a maximum void fraction as current processing techniques and particle integrity will permit. Typically, the latex polymer particles contain a void or voids with a void fraction from 0.01 to 0.70, including void fractions from 0.05 to 0.50, from 0.10 to 0.40, and from 0.20 to 0.35. The void fractions are determined by comparing the volume occupied by the latex polymer particles after they have been compacted from a dilute dispersion in a centrifuge to the volume of non-voided particles of the same composition. Void fraction can also be expressed as a percentage (%).

The latex polymer particles useful in the invention are prepared by conventional polymerization techniques including sequential emulsion polymerization. Dispersions of the latex polymer particles are prepared according to processes including those disclosed in U. S. Patent Nos. 4,427,836; 4,469,825; 4,594,363; 4,677,003; 4,920,160; and 4,970,241. The latex polymer particles may also be prepared, for example, by polymerization techniques disclosed in European Patent Applications EP 0 267 726; EP 0 331 421; EP 0 915 108 and U.S. Patent Nos. 4,910,229; 5,157,084; 5,663,213 and 6,384,104.

In a separate embodiment, other emulsion polymer dispersions useful in the invention include heteropolymer dispersions, bimodal dispersions and dispersions prepared from water insoluble monomers. These latex polymer particles are prepared according to processes including those disclosed in U.S. Patent Nos. 4,456,726, 4,468,498, 4,539,361, 5,521,266, 5,340,858, 5,350,787 or 5,352,720. The latex polymer particles may also be prepared, for example, by polymerization techniques disclosed in European Patent Applications EP 0 265 142, EP 0 119 054 and EP 0 118 325 , EP 0 022 663 or EP 0 342 944.

In a separate embodiment, other latex particles useful in the invention are latex particles including minute void particles and layers that are expanded by expansion of a gas or a low boiling solvent in a foaming process, for example, that are disclosed in U.S. Patents No. 5,102,693 and 5,137,864. This includes penetration of the shell polymer into the core polymer. Penetration of the shell polymer into the core polymer may be controlled by both thermodynamic and kinetic factors. Thermodynamic factors may determine the stability of the ultimate particle morphology according to the minimum surface free energy change principle. However, kinetic factors such as the viscosity of the core polymer at the polymerization temperature of the shell and the swelling time afforded the second stage polymer may modify the final degree of penetration. Thus, various process factors may control penetration of the shell into the core, and ultimately the morphology of the void structure in the expanded and dried particle. Such processes are known in the emulsion polymerization art such as, for example, in U.S. Patents No. 5,036,109; 5,157,084; and 5,216,044. The glass transition temperature of the shell polymer is typically greater than 40° C. as calculated using the Fox equation; the particles may be cross-linked and may have functionalized surfaces.

Also contemplated are multi-modal particle size emulsion polymers wherein two or more distinct particle sizes or very broad distributions are provided as is taught in US Patents No. 5,340,858; 5,350,787; 5,352,720; 4,539,361; and 4,456,726.

As used herein, the term "sequentially emulsion polymerized" or "sequentially emulsion produced" refers to polymers (including homopolymers and copolymers) which are prepared in aqueous medium by an emulsion polymerization process in the presence of the dispersed polymer particles of a previously formed emulsion polymer such that the previously formed emulsion polymers are increased in size by deposition thereon of emulsion polymerized product of one or more successive monomer charges introduced into the medium containing the dispersed particles of the pre-formed emulsion polymer.

In the sequential emulsion polymerization of a multi-stage emulsion polymer, the term "seed" polymer is used to refer to an aqueous emulsion polymer dispersion which may be the initially-formed dispersion, that is, the product of a single stage of emulsion polymerization or it may be the emulsion polymer dispersion obtained at the end of any subsequent stage except the final stage of the sequential polymerization.

The glass transition temperature ("Tg") of the emulsion polymers used herein are those calculated by using the Fox equation (T.G. Fox, Bull. Am. Physics Soc., Volume 1, Issue No. 3, page 123(1956)). that is, for calculating the Tg of a copolymer of monomers M1 and M2,

$$1/Tg(calc.) = w(M1)/Tg(M1) + w(M2)/Tg(M2)$$

, wherein

Tg(calc.) is the glass transition temperature calculated for the copolymer

w(M1) is the weight fraction of monomer M1 in the copolymer

w(M2) is the weight fraction of monomer M2 in the copolymer

Tg(M1) is the glass transition temperature of the homopolymer of M1

Tg(M2) is the glass transition temperature of the homopolymer of M2, all temperatures being in °K.

The glass transition temperatures of homopolymers may be found, for example, in "Polymer Handbook", edited by J. Brandrup and E.H. Immergut, Interscience Publishers.

According to one embodiment, latex polymer particles useful in the method of this invention are formed from a multi-staged particle comprising at least one core polymer and at least one shell polymer. The core polymer and shell polymers may each be made in a single polymerization step or in a sequence of polymerization steps. While the core may be made in single stage (or step) of the sequential polymerization and the shell may be the product of a single sequential step following the core stage, preparation of the core component may involve a plurality of steps in sequence followed by preparation of the shell, which may also involve a series of sequential steps. The amount of polymer deposited to form the shell portion or shell polymer is generally such as to provide an overall size of the finished multistage polymer particle of between 0.05 to 1 micron. The ratio of the core weight to the total polymer particle weight is from 1/4 (25 wt. % core) to 1/100 (1 wt. % core) and includes a ratio from 1/8 (12 wt. % core) to 1/50 (2 wt. % core).

The monomers used in the emulsion polymerization of the "core" (or "seed") polymer of the latex polymer particles preferably include at least 5 weight % of one or more monoethylenically unsaturated monomers containing at least one carboxylic acid group, based on total monomer weight of the core. The core polymer may be obtained, for example, by the emulsion homopolymerization of the monoethylenically unsaturated monomer containing at least one carboxylic acid group or by copolymerization of two or more of the monoethylenically unsaturated monomers containing at least one carboxylic acid group. Preferably, the monoethylenically unsaturated monomer containing at least one carboxylic acid group is co-polymerized with one or more non-ionic (that is, having no ionizable group) ethylenically unsaturated monomers. The presence of the ionizable acid group makes the core swellable by the action of a swelling agent, such as an aqueous or gaseous medium containing a base to partially neutralize the acid core polymer and cause swelling by hydration.

As used herein, the term "(meth)acrylic" refers to either the corresponding acrylic or methacrylic acid and derivatives; similarly, the term "alkyl (meth)acrylate" refers to either the corresponding acrylate or methacrylate ester. As used herein, all percentages referred to will be expressed in weight percent (%), based on total weight of polymer or composition involved, unless specified otherwise.

Typically, emulsion polymers of the invention are water insoluble and are dispersible in water. As used herein, the term "water soluble", as applied to monomers, indicates that the monomer has a solubility of at least 1 gram per 100 grams of water, preferably at least 10 grams per 100 grams of water and more preferably at least about 50 grams per 100 grams of water. The term "water insoluble", as applied to monomers; refers to monoethylenically unsaturated monomers which have low or very low water solubility under the conditions of emulsion polymerization, as described in U.S. Patent No. 5,521,266. An aqueous system refers to any solution containing water.

The core polymer may optionally contain from 1 to 20 wt. %, including from 2 to 10%, based on the total monomer weight of the core, of polyethylenically unsaturated monomer units, such as, for example, ethylene glycol di(meth)acrylate, allyl (meth)acrylate, 1,3-butanediol di(meth)acrylate, diethylene glycol di(meth)acrylate, trimethylolpropane tri(meth)acrylate and divinylbenzene. Alternatively, the core polymer may optionally contain from 0.1 to 60 wt. %, based on the total monomer weight of the core, of butadiene.

Suitable monoethylenically unsaturated monomers containing at least one carboxylic acid group useful in preparation of the "core" polymer, include, for example, acrylic acid, methacrylic acid, acryloxypropionic acid, (meth)acryloxypropionic acid, itaconic acid, aconitic acid, maleic acid or anhydride, fumaric acid, crotonic acid, monomethyl maleate, monomethyl fumarate and monomethyl itaconate. In one embodiment, the carboxylic acid group containing monomer is acrylic acid.

Suitable non-ionic ethylenically unsaturated monomers useful in preparation of the "core" polymer, include, for example, styrene, vinyltoluene, ethylene, vinyl acetate, vinyl chloride, vinylidene chloride, acrylonitrile, (meth)acrylamide, $(C_1-C_{22})$alkyl and $(C_3-C_{20})$alkenyl esters of (meth)acrylic acid, such as methyl (meth)acrylate, ethyl (meth)acrylate, butyl (meth)acrylate, 2-ethylhexyl (meth)acrylate, benzyl (meth)acrylate, lauryl (meth)acrylate, oleyl (meth)acrylate, palmityl (meth)acrylate and stearyl (meth)acrylate.

The monomers used in the emulsion polymerization of the "shell" (or "sheath") polymer of the latex polymer particles preferably comprise one or more non-ionic ethylenically unsaturated monomers. Optionally, one or more monoethylenically unsaturated monomers containing at least one carboxylic acid group may be polymerized in the shell, such as, for example, acrylic acid, methacrylic acid, acryloxypropionic acid, methacryloxypropionic acid, aconitic acid, crotonic acid, maleic acid (and derivatives such as corresponding anhydride, amides and esters), fumaric acid (and derivatives such as corresponding amides and esters), itaconic and citraconic acids (and derivatives such as corresponding anhydrides, amides and esters). Acrylic acid and methacrylic acid are preferred carboxylic acid group-containing monomers. When present in the shell polymer, the amount of carboxylic acid group-containing monomer units is from 0.1 to 10%, including from 0.5 to 5%, based on total weight of the shell portion of the polymer particle.

Optionally, one or more monoethylenically unsaturated monomers containing at least one "non-carboxylic" acid group may be polymerized in the shell, such as, for example, allylsulfonic acid, allylphosphonic acid, allyloxybenzenesulfonic acid, 2-acrylamido-2-methylpropanesulfonic acid (the acryonym "AMPS" for this monomer is a trademark of Lubrizol Corporation, Wickliffe, Ohio, USA), 2-hydroxy-3-(2-propenyloxy)propanesulfonic acid, 2-methyl-2-propene-1-sulfonic acid, 2-methacrylamido-2-methyl-1-propane-sulfonic acid, 3-methacrylamido-2-hydroxy-1-propanesulfonic acid, 3-sulfopropyl acrylate, 3-sulfopropyl methacrylate, isopropenylphosphonic acid, vinylphosphonic acid, phosphoethyl methacrylate, styrenesulfonic acid, vinylsulfonic acid and the alkali metal and ammonium salts thereof. Preferred unsaturated "non-carboxylic" acid monomers are 2-acrylamido-2-methyl-propanesulfonic acid and styrenesulfonic acid. When present in the shell polymer, the amount of unsaturated "non-carboxylic" acid monomer units is from 0.5 to 10%, including from 1 to 5%, based on total weight of the shell portion of the polymer particle.

Suitable non-ionic ethylenically unsaturated monomers useful in preparing the shell polymer include, for example, vinyl acetate, acrylonitrile, methacrylonitrile, nitrogen-containing ring compound unsaturated monomers, vinylaromatic monomers, ethylenic monomers and selected (meth)acrylic acid derivatives. In one embodiment of the invention, the shell portion of the latex polymer particles comprises as polymerized units from zero to 95% (meth)acrylic acid derivative monomer and from zero to 80% vinylaromatic monomer, based on total weight of the shell portion.

In one embodiment, one class of (meth)acrylic acid derivative is represented by $(C_1-C_{22})$alkyl (meth) acrylate, substituted (meth)acrylate and substituted (meth)acrylamide monomers. Each of the monomers can be a single monomer or a mixture having different numbers of carbon atoms in the alkyl portion. Preferably, the monomers are selected from one or more of $(C_1-C_4)$ alkyl (meth)acrylates, hydroxy$(C_2-C_4)$alkyl (meth)acrylates (such as hydroxyethyl methacrylate and hydroxypropyl methacrylate), dialkylamino$(C_2-C_4)$alkyl (meth) acrylates (such as dimethylaminoethyl methacrylate) and dialkylamino$(C_2-C_4)$alkyl (meth)acrylamides (such as dimethylaminopropyl methacrylamide). The alkyl portion of each monomer can be linear or branched.

Suitable examples of alkyl (meth)acrylate monomers where the alkyl group contains 1 to 4 carbon atoms include methyl methacrylate (MMA), methyl and ethyl acrylate, propyl methacrylate, butyl methacrylate (BMA), butyl acrylate (BA), isobutyl methacrylate (IBMA) and combinations thereof.

Suitable examples of alkyl (meth)acrylate monomers where the alkyl group contains 10 or more carbon atoms include decyl methacrylate, isodecyl methacrylate, dodecyl methacrylate (also known as lauryl methacrylate), tetradecyl methacrylate (also known as myristyl methacrylate), pentadecyl methacrylate, hexadecyl methacrylate (also known as cetyl methacrylate), octadecyl methacrylate (also known as stearyl methacrylate), eicosyl methacrylate, behenyl methacrylate and combinations thereof.

In one embodiment, the shell portion of the latex polymer particles comprises, as polymerized units, from 5 to 95%, including from 10 to 80% and from 20 to 70%, based on total weight of the shell portion, of (meth) acrylic acid derivative monomer selected from one or more of methyl acrylate, methyl methacrylate, ethyl acrylate, ethyl methacrylate, butyl acrylate, butyl methacrylate, isobutyl acrylate, isobutyl methacrylate, hydroxyethyl methacrylate, hydroxypropyl methacrylate, dimethylaminoethyl methacrylate and dimethylaminopropyl methacrylamide.

Suitable vinylaromatic monomers include, for example, styrene, $\alpha$-methylstyrene, vinyltoluene, alkyl-substitiued styrene (such as t-butylstyrene and ethylvinylbenzene), halogenated styrenes (such as chlorostyrene and 3,5-bis(trifluoromethyl)styrene); styrene, ethylvinylbenzene and t-butylstyrene are preferred vinylaromatic monomers. When present in the shell polymer, the amount of vinylaromatic monomer units is from 1 to 80%, including amounts of vinylaromatic monomer units from 5 to 70% and from 10 to 50%, based on total weight of the shell portion of the polymer particle.

Suitable examples of nitrogen-containing unsaturated ring compound monomers include vinylpyridine, 2-methyl-5-vinylpyridine, 2-ethyl-5-vinylpyridine, 3-methyl-5-vinylpyridine, 2,3-dimethyl-5-vinylpyridine, 2-methyl-3-ethyl-5-vinylpyridine, methyl-substituted quinolines and isoquinolines, 1-vinylimidazole, 2-methyl-1-vinylimidazole, N-vinylcaprolactam, N-vinylbutyrolactam and N-vinylpyrrolidone.

Additional suitable monomers include ethylenic monomers (for example, ethylene, propylene, isobutylene, long chain alkyl $\alpha$-olefins (such as $(C_{10}-C_{20})$ alkyl $\alpha$-olefins), vinyl halides (such as vinyl chloride, vinyl fluoride, vinyl bromide), vinylidene halides (such as vinylidene chloride and vinylidene fluoride), partially halogenated (meth)acrylates (such as 2-(perfluoro-dodecyl)ethyl acrylate, 2-(perfluorododecyl)ethyl methacrylate, 2-(perfluoro-hexyl)ethyl acrylate, 2-(perfluorohexyl)ethyl methacrylate, hexafluoroisopropyl methacrylate, 2,2,3,3-tetrafluoropropyl acrylate and 2,2,2-trifluoroethyl methacrylate), and partially halogenated alkenes (such as 1,1,1-trifluoro-2,2-(trifluoromethyl)-butene).

The glass transition temperature ($T_g$) of emulsion polymers usefully employed in accordance with the invention are of a wide range and will vary according to the polymer morphology (*e.g.* core shell, multi-stage) of a particular emulsion polymer.

According to one embodiment of the invention, monomers that comprise the shell are selected to provide a Tg in at least one shell which is high enough to support the void within the latex particle. Preferably the $T_g$ of at least one shell is greater than 50°C, more preferably greater than 60°C and most preferably greater than 70°C, as measured by differential scanning calorimetry (DSC).

When the shell portion of the latex polymer particle is provided by a single stage polymerization process upon the core polymer, the entire shell portion produced may be referred to as the sheath, shell or "outermost" shell. However, when the shell portion is provided by a multi-stage polymerization process, then the "outermost" shell is defined by the composition of the final distinct polymerization stage used to prepare the latex particles. Typically, the "outermost" shell, when provided by a multistage polymerization process, will comprise at least about 25%, preferably at least 50% and more preferably at least 75% of the total shell portion of the latex polymer particle. Preferably, the cross-linking levels used to achieve the beneficial effects of the present invention are incorporated predominantly into the "outermost" shell of the latex particles. Cross-linking levels, unless indicated otherwise, are based on the total shell portion of the latex polymer particle, regardless of the number of stages used to prepare the latex particles.

The void of the latex polymer particles is preferably produced by swelling the acid core with an aqueous basic swellant that permeates the shell and expands the core. This expansion may involve partial merging of the outer periphery of the core into the pores of the inner periphery of the shell and also partial enlargement or bulging of the shell and the entire particle overall. When the swellant is removed by drying, the shrinkage of the core develops a microvoid, the extent of which depends on the resistance of the shell to restoration to its previous size. Suitable swelling agents for the core include, for example, ammonia, ammonium hydroxide, alkali metal hydroxides (such as sodium hydroxide), and volatile lower aliphatic amines (such as trimethylamine and triethylamine). The swelling step may occur during any of the multi-stage shell polymerization steps, between any of the staged polymerization steps, or at the end of the multi-stage polymerization process.

Cross-linking of the shell portion of the latex particles is required to achieve enhanced storage stability of UV radiation-absorption compositions. The cross-linking level is from 4 to 80%, including cross-linking levels from 5 to 70%, from 10 to 60% and from 20 to 50%, based on total weight of the shell polymer portion of the latex particles. For latex particles based on multi-stage polymerization, it is preferable that the cross-linking take place predominantly in the "outermost" shell of the latex particle; typically, the cross-linking level is from 10 to 100%, including cross-linking levels from 15 to 70% and from 20 to 60%, based on weight of the "outermost" shell polymer portion of the latex particles, where the cross-linking is based on polymerized monomer units of one or more polyethylenically unsaturated monomers and multifunctional monomers. At total shell cross-linking levels below 4%, the cross-linking level is not sufficient to provide satisfactory SPF Enhancement Retention of formulated personal care formulations containing the latex particles.

Cross-linking in the shell can be derived from the use of one or more of the polyethylenically unsaturated monomers. Suitable polyethylenically unsaturated cross-linkers include, for example, di(meth)acrylates, tri (meth)acrylates, tetra(meth)acrylates, polyallylic monomers, polyvinylic monomers and (meth)acrylic monomers having mixed ethylenic functionality.

Di(meth)acrylates cross-linkers useful in the present invention include, for example, bis(1-acryloxy-2-hydroxypropyl)phthalate, bis(1-methacryloxy-2-hydroxypropyl)-phthalate, bis(2-acryloxyethyl)phosphate, bis(2-methacryloxyethyl)phosphate, bis(acryloxy-2-hydroxypropyloxy)diethylene glycol, bis(methacryloxy-2-hydroxy-propyloxy)diethylene glycol, bisphenol A diacrylate, bisphenol A dimethacrylate, bisphenol A di-(3-acryloxyethyl) ether, bisphenol A di-(3-methacryloxyethyl) ether, bisphenol A di-(3-acryloxy-2-hydroxypropyl) ether, bisphenol A di-(3-methacryloxy-2-hydroxypropyl) ether, 1,3-butanediol diacrylate, 1,3-butanediol dimethacrylate, 1,4-butanediol di-(3-acryloxy-2-hydroxypropyl) ether, 1,4-butanediol di-(3-methacryloxy-2-hydroxypropyl) ether, 1,4-butanediol diacrylate, 1,4-butanediol dimethacrylate, 1,3-butanediol bis(acryloxypropionate), 1,3-butanediol bis(methacryloxypropionate), 1,4-butanediol bis(acryloxypropionate), 1,4-butanediol bis(methacryloxypropionate), 2-butene-1,4-diol diacrylate, 2-butene-1,4-diol dimethacrylate, 1,4-cyclohexanediol diacrylate, 1,4-cyclo-hexanediol dimethacrylate, 1,10-decanediol diacrylate, 1,10-decanediol dimethacrylate, diethylene glycol diacrylate, diethylene glycol dimethacrylate, 2,2-dimethyl-1,3-propanediol diacrylate, 2,2-dimethyl-1,3-propanediol dimeth-acrylate, dipentaerythritol ether acrylate, dipentaerythritol ether methacrylate, diphenolic acid di-(3-acryloxy-2-hydroxypropyl) ether, diphenolic acid di-(3-methacryloxy-2-hydroxypropyl) ether, dipropylene glycol diacrylate, dipropylene glycol dimethacrylate, 7,7,9-trimethyl-3,13-dioxo-3,14-dioxa-5,12-diazahexadecane-1,16-diol diacrylate], 7,7,9-trimethyl-3,13-dioxo-3,14-dioxa-5,12-diazahexadecane-1,16-diol dimethacrylate, 1,12-dodecanediol diacrylate, 1,12-dodecanediol dimethacrylate, 1,2-ethanediol diacrylate, 1,2-ethanediol dimethacrylate, 1,2-ethanediol bis(acryloxypropionate), 1,2-ethanediol bis(methacryloxy-propionate), 1,6-hexanediol diacrylate, 1,6-hexanediol dimethacrylate, 1,9-nonanediol diacrylate, 1,9-nonanediol dimethacrylate, 1,5-pentanediol diacrylate, 1,5-pentanediol dimethacrylate, 1,4-phenylenediacrylate, 1,4-phenylenedimethacrylate, 1-phenyl-1,2-ethanediol diacrylate, 1-phenyl-1,2-ethanediol dimethacrylate, polyoxyethyl-2,2-di(p-hydroxyphenyl)propane diacrylate, polyoxyethyl-2,2-di(p-hydroxyphenyl)propane dimethacrylate, 1,2-propanediol diacrylate, 1,2-propanediol dimethacrylate, 1,3-propanediol diacrylate, 1,3-propanediol dimethacrylate, propoxylated bisphenol A diacrylate, propoxylated bisphenol A dimethacrylate, tetrabromobisphenol A di-(3-acryloxy-2-hydroxy-propyl) ether, tetrabromobisphenol A di-(3-methacryloxy-2-hydroxypropyl) ether, tetrachlorobisphenol A di-(3-acryloxy-2-hydroxy-propyl) ether, tetrachlorobisphenol A di-(3-methacryloxy-2-hydroxypropyl) ether, tetraethylene glycol diacrylate, tetraethylene glycol dimethacrylate, triethylene glycol diacrylate, triethylene glycol dimethacrylate, 2,2,4-trimethyl-1,3-pentanediol diacrylate, 2,2,4-trimethyl-1,3-pentanediol dimethacrylate, tripropylene glycol diacrylate, and tripropylene glycol dimethacrylate. Additional suitable di(methacrylates) cross-linkers include, for example, aromatic fluorinated diacrylates (see U.S. Patent No. 5,380,901 for further general and specific details); fluorinated diacrylates having structure 1,3-[$CH_2$=$CHCO_2CH_2CHOHCH_2OC(CF_3)_2$]$_2$-$C_6H_3R_f$ where $R_f$ = $C_1$-$C_{30}$ (see U.S. Patent No. 4,914,171 for further general and specific details), fluorinated diacrylates (see European Patent Application EP 0 529 895 for further general and specific details), 1,3-bis(2-hydroxyhexafluoro-2-propyl)benzene diacrylate, 1,3-bis(2-hydroxyhexafluoro-2-propyl)benzene dimethacrylate, 1,3-bis(hydroxyperfluoroalkyl)benzene diacrylates and trifluoromethyl analogs of bisphenol A (meth)acrylates.

Tri(meth)acrylates cross-linkers useful in the present invention include, for example, 1,2,4-butanetriol triacrylate, 1,2,4-butanetriol trimethacrylate, glycerol triacrylate, glycerol trimethacrylate, pentaerythritol triacrylate, pentaerythritol trimethacrylate, polyoxypropyltrimethylolpropane triacrylate, polyoxypropyl-trimethylolpropane trimethacrylate, silicone triacrylate, silicone trimeth-acrylate, 1,3,5-triacryloylhexahydro-s-triazine, 1,3,5-trimethacryloylhexahydro-s-triazine, trimethylolethane triacrylate, trimethylolethane trimethacrylate, 1,1,1-trimethylol propane triacrylate, 1,1,1-trimethylol propane trimethacrylate, 1,2,3-trimethylol propane triacrylate, 1,2,3-trimethylol propane trimethacrylate, 1,1,1-trimethylol propane tris(acryloxypropionate), 1,1,1-trimethylol propane tris(methacryloxypropionate), 1,2,3-trimethylol propane tris(acryloxypropionate), 1,2,3-trimethylol propane tris(methacryloxypropionate), tris-(2-acryloxyethyl) isocyanurate, tris-(2-methacryloxyethyl) isocyanurate.

Tetra(meth)acrylates cross-linkers useful in the present invention include, for example, pentaerythritol tetraacrylate, pentaerythritol tetramethacrylate, pentaerythritol tetrakis(acryloxypropionate), pentaerythritol tetrakis(methacryloxypropionate).

Polyallylic monomers useful as cross-linkers in the present invention include, for example, diallyl carbonate, diallyl fumarate, diallyl glutarate, diallyl itaconate, diallyl maleate, diallyl phthalate, diallyl succinate, diisopropenylbenzene, triallyl cyanurate, triallyl isocyanurate, triallyl phosphate, and 1,3,5-triisopropenyl-benzene.

Polyvinylic monomers useful as cross-linkers in the present invention include, for example, diethyleneglycol divinyl ether, divinylbenzene, divinyl ketone, divinylpyridine, divinyl sulfide, divinyl sulfone, divinyltoluene, divinylxylene, glycerol trivinyl ether, trivinylbenzene, and 1,2,4-trivinylcyclohexane, N,N'-methylenebisacrylamide, partially fluorinated $\alpha,\omega$-dienes such as $CF_2$=$CFCF_2CF_2CH_2CH$=$CH_2$ (see PCT Patent Application WO 96/10047 for further general and specific details), trifluoroalkadienes (see U.S. Patent No. 5,043,490 for further general and specific details), trifluorodivinylbenzenes (see U.S. Patent No. 5,043,490 for further general and specific details) and fluorinated divinyl ethers of fluorinated 1,2-ethanediol (see U.S. Patent No. 5,589,557 for further general and specific details). In one embodiment, the polyvinylic monomer is divinylbenzene.

(Meth)acrylic monomers having mixed ethylenic functionalty that are useful as cross-linkers in the present invention include, for example, the acrylate ester of neopentyl glycol monodicyclopentenyl ether, allyl acryloxypropionate, allyl acrylate, allyl methacrylate, crotyl acrylate, crotyl methacrylate, 3-cyclohexenylmethyleneoxyethyl acrylate, 3-cyclohexenylmethyleneoxyethyl methacrylate, dicyclopentadienyloxyethyl acrylate, dicyclopentadienyloxyethyl methacrylate, dicyclopentenyl acrylate, dicyclopentenyl methacrylate, dicyclopentenyloxyethyl acrylate, dicyclopentenyloxyethyl methacrylate, methacrylate ester of neopentyl glycol monodicyclopentenyl ether, methallyl acrylate, trimethylolpropane diallyl ether mono-acrylate, trimethylolpropane diallyl ether mono-methacrylate and N-allyl acrylamide. In one embodiment, the (meth)acrylic monomer having mixed ethylenic functionalty is allyl methacrylate.

Another route useful to cross-link the shell portion of the latex polymers is based on the use of one or more multifunctional monomers (MFM) to provide post-polymerization cross-linking and reinforcement of the sheath. The MFM comprise at least one functional group capable of vinyl copolymerization and at least one functional group capable of reaction with suitable reactive molecules. Suitable functional groups and reactive molecules for post-polymerization cross-linking of the polymer sheath include, for example, reacting polyol functional groups in the sheath with acid and aldehyde (such as formaldehyde) reactive molecules; reacting siloxane functional groups in the sheath with primary amine or amide reactive molecules; the addition of Zn (II) to poly (acid) functional groups in the sheath; irradiation; heat curing of functional groups in sheath with or without additional initiator; and the addition of anhydride, isocyanate, epoxysiloxane, diepoxide (such as bisphenol A diglycidyl ether) and hydroxy acid reactive molecules to amine, alcohol and carboxyl/(ate) functional groups which make up the sheath matrix.

Multifunctional monomers (MFM) suitable for post-polymerization cross-linking include, for example, vinylsiloxanes, acryloylsiloxane, methacryloylsiloxanes, acetoacetoxyalkyl (meth)acrylates (such as acetoacetoxyethyl methacrylate or AAEM), N-alkylol (meth)acrylamides, epoxy (meth)acrylates (such as glycidyl methacrylate), acryloylisocyanates and methacryloylisocyanates. Suitable vinylsiloxanes include, for example, vinyltrimethoxysilane, vinyltriethoxysilane, vinytrioxy-propylsilane, acrylamidopropyltrimethoxysilanes, methacrylamidopropyltri-methoxysilanes, styrylethyltrimethoxysilane and monomers known as Silquest™ silanes (Whitco Corp., Tarrytwon, NY, USA). Suitable acryloylsiloxanes and methacryloylsilanes include, for example, 3-acryloxypropyltrimethoxysilane, methacryloxypropyltrimethoxysilane, (3-acryloxypropyl)methyldialkoxysilanes and Silquest™ silanes. Suitable N-alkylol (meth)acrylamides include, for example, N-methylol acrylamide, N-methylol methacrylamide, N-butoxymethyl acrylamide, isobutoxymethyl acrylamide and methyl acrylamidoglycolate methyl ether. In one embodiment, the MFM is selected from acetoacetoxyethyl methacrylate, N-methylol methacrylamide and glycidyl methacrylate.

A shell polymer based on MFM as described above may be reacted with reactive molecules selected from amines, diamines, amino acids and aminoalkyltrialkoxysilanes; optionally followed by the addition of other reactive molelcules: aldehydes (such as formaldehyde), dialdehydes (such as glutaric dialdehyde), hydrazides and dihydrazides (such as succinic dihydrazide) to form post-polymerization cross-linked solgels.

In one embodiment, the emulsion polymers are latex polymer particles containing a void and having a particle size from 20 to 1000 nanometers. The latex polymer particles comprise a shell portion prepared, as described in U. S. Patent No. 6,384,104, by one or more steps selected from: (i) polymerization to incorporate from 4 to 80 percent monomeric units, based on total weight of the shell portion, of one or more polyethylenically unsaturated monomers; and (ii) polymerization to incorporate from 4 to 80 percent monomeric units, based on total weight of the shell portion, of one or more multifunctional monomers having at least one functional group capable of vinyl copolymerization and at least one functional group capable of reaction with a reactive molecule effective to produce post-polymerization cross-linking.

In a separate embodiment, the emulsion polymers are latex polymer particles including a void and comprise from about 0.1 weight percent to about 50 weight percent of latex particles, based on total weight non-volatiles.

The dry polymer compositions improved by the method of this invention has utility in any application where protection from UV radiation is useful. For example, the improved composition may be used on human skin and hair, such as, for example personal care products, including cosmetics, sunscreens, and hair care products; and incorporated in pharmaceuticals applied to skin and hair. In addition, the method of this invention is also useful in further improving the UV radiation-absorption storage stability of compositions for coatings on plant life, plastics, wood, and metal for example in the form of a clear varnish.

According to one embodiment, polymer particles of the invention are included in a personal care composition, the composition comprising at least one UV radiation absorbing agent and dried latex particles prepared from a latex emulsion, the latex particles from the emulsion including a void and having a particle size of from about 100 nm to about 380 nm before drying, wherein the dried latex particles are added to the composition to increase the UV radiation absorption of the composition.

The polymer particles of the present invention are incorporated in personal care, consumer, coating and pharmaceutical compositions and formulations that increase UV radiation absorption of compositions and provide a method for providing storage stability of such compositions. Radiation-absorption compositions include incorporating from 5 to 70%, also incorporating from 10 to 50% and from 20 to 40%, based on total weight non-volatiles in the composition, of latex polymer particles into the composition containing at least one ultraviolet (UV) radiation-absorbing agent; based on total weight of the composition, the level of latex polymer particles is from 0.5 to 10%, including levels of latex particles from 1 to 7% and from 2 to 5%. As used herein, the term "UV radiation" includes both UVA and UVB radiation.

As used herein, the term "non-volatiles" refers to solid or liquid components of the personal care formulation that do not readily evaporate at ambient temperatures due to their vapor pressure (such as polymer particles, UV radiation-absorbing agents and conventional adjuvants).

Cationic surfactants are usefully employed in the invention as coagulating agents for coagulating the emulsion polymers. Cationic surfactants contain hydrophilic functional groups where the charge of the functional groups is positive when dissolved or dispersed in an aqueous solution. Suitable cationic surfactants useful in the present invention include, for example, $(C_{12}-C_{20})$amine compounds (such as lauryl pyridinium chloride, octylbenzyltrimethylammonium chloride, hexadecyltrimethylammonium chloride, hexadecyltrimethylammonium bromide and dodecyltrimethylammonium chloride), oxygen containing amines, quaternary amine salts, ester groups containing quaternary ammonium salts, as disclosed in European patent Publication Nos. EP 0 345 842 A2, EP 0 239 910 and U.S. Pat. No. 4,137,180. Other suitable cationic surfactants include methylbis (tallowamidoethyl)(2- hydroxyethyl) ammonium methyl sulphate, methyl bis (hydrogenated tallowamido ethyl)(2 hydroxyethyl) ammonium methyl sulphate, imidazolinium salts, including 1-methyl-1-(tallowylamido) ethyl-2-tallowyl-4,5 dihydro imidazolinium methosulphate and 1-methyl-1-(palmitoylamido) ethyl-2-octadecyl-4,5-dihydroimidazolinium chloride.

In one embodiment, coagulating one or more specific emulsion polymers with one or more cationic surfactants and drying the coagulate unexpectedly provides flowable dry polymer powders that exhibit little to no dusting. Moreover, the dry polymer solids have increased particle size, no decrease in bulk density, low MEP and lowered Kst values. The specific emulsion polymers include latex polymer particles containing a void and having a particle size from 20 to 1000 nanometers. The latex polymer particles comprise a shell portion prepared, as described in U. S. Patent No. 6,384,104, by one or more steps selected from: (i) polymerization to incorporate from 4 to 80 percent monomeric units, based on total weight of the shell portion, of one or more polyethylenically unsaturated monomers; and (ii) polymerization to incorporate from 4 to 80 percent monomeric units, based on total weight of the shell portion, of one or more multifunctional monomers having at least one functional group capable of vinyl copolymerization and at least one functional group capable of reaction with a reactive molecule effective to produce post-polymerization cross-linking.

In a separate embodiment of the invention, cationic surfactants are used in combination with other types of surfactants including non-ionic, anionic, cationic, and amphoteric (zwitterionic) surfactants, the selection depending upon compatibility of the cationic surfactant among the other surfactants used and with other ingredients of the aqueous compositions. Hydrophilic cationic, amphoteric or zwitterionic surfactants may also or alternatively be used provided that they are compatible with the polymer and other ingredients of the aqueous system in the quantity required by the invention. As used here, compatibility refers to no adverse chemical reaction and/or physical interaction of the polymer and other ingredients of the aqueous system that materially impacts the utility of the polymer within the metes and bounds of the invention.

Non-ionic surfactants are surfactants having no charge when dissolved or dispersed in aqueous solutions. Typical nonionic surfactants useful in the present invention include, for example, $(C_6-C_{18})$alkyl-phenol alkoxylates (such as t-octyl phenol and nonylphenol ethoxylates having 1-70, and preferably 5-16, ethyleneoxide units), $(C_{12}-C_{20})$alkanol alkoxylates and block copolymers of ethylene oxide and propylene oxide; optionally, the end groups of polyalkylene oxides can be blocked, whereby the free OH groups of the polyalkylene oxides can be etherified, esterified, acetalized and/or aminated. Another modification consists of reacting the free OH groups of the polyalkylene oxides with isocyanates. Useful non-ionic surfactants also include, for example, $(C_4-C_{18})$alkyl glucosides as well as the alkoxylated products obtainable therefrom by alkoxylation, particularly those obtainable by reaction of alkyl glucosides with ethylene oxide.

Amphoteric or zwitterionic surfactants (such as cocamidopropyl betaine) including both acidic and basic hydrophilic groups and can also be used in the present invention.

Anionic surfactants are surfactants having a hydrophilic functional group in a negatively charged state in an aqueous solution. Typical anionic surfactants useful in the present invention include, for example, $(C_8-C_{18})$alkyl carboxylic acids, $(C_{12}-C_{20})$sulfonic acids (sulfonated alkylaryl compounds such as sodium dodecylbenzenesulfonate), $(C_{10}-C_{20})$sulfuric acid esters (sulfated alcohols such as lauryl and cetyl sulfates, sodium salts), phosphate esters and salts thereof.

Accordingly, the invention provides a process for manufacturing a dry polymer composition having reduced dusting comprising the steps of: (a) coagulating one or more emulsion polymers with one or more cationic surfactants and (b) drying the coagulate.

The first step includes preparing an aqueous particle dispersion from one or more emulsion polymers. The emulsion polymer dispersion can be prepared at high percent solids weight fraction and subsequently diluted to achieve a preferred lower percent solids weight fraction. Suitable amounts of the aqueous emulsion polymers used in the coagulation process of the present invention are from 0.01 to 70 percent, including from 0.01 to 20 percent and including from 0.01 to 10 percent, based on weight of aqueous polymer dispersion.

The first step also includes preparing a coagulating agent from one or more cationic surfactants (also referred to as coagulants). The concentration of coagulant solution is from 0.01 to 30 weight percent (as solids), including from 0.01 to 20 weight percent and including from 0.01 to 10 weight percent, based on weight of aqueous solution. According to one embodiment of the invention, the coagulating agent includes one or more cationic surfactants. In a separate embodiment, the coagulant includes one or more cationic and other surfactants.

According to a separate embodiment, the coagulating agent comprises one or more cationic surfactants in combination with one or more other coagulants including metal salts, metal salts of organic compounds, metal salts of organic acids, salts of inorganic acids and other electrolytes to agglomerate the polymer dispersion as a coagulated slurry. Suitable examples of metal salts include sodium chloride, sodium bromide, magnesium acetate, magnesium chloride, magnesium sulfate, sodium acetate, sodium citrate, calcium citrate, calcium hypophosphite and calcium chloride. It is preferred that the electrolyte solution is prepared with a salt containing a divalent cation, such as calcium chloride $(CaCl_2)$. The concentration of the aqueous electrolyte solution used a co-coagulant is between 0.1 and 2.0 weight percent, including from 0.2 to 1.0 weight percent, based on the weight percent of the aqueous solution.

The coagulation step comprises addition of one or more cationic surfactants to a dispersion of one or more emulsion polymers in the form of an aqueous concentrate, including a dilute aqueous dispersion, a diluted aqueous concentrate, aqueous dispersions and concentrates including solvents and nonaqueous dispersions and concentrates. Coagulation with a water soluble, or partially water soluble solvent including alcohols such as methanol and the like is also possible. According to a separate embodiment spray coagulation is usefully employed to prepare the dried polymer powders. It is useful to control the coagulation temperature because too high a coagulation temperature results in excessively large particles causing poor dispersion. In contrast, too low a temperature results in excessively small particles resulting in a wide particle size span and excessive dust. Coagulation temperature varies with the emulsion polymer composition, particle size, emulsifier type, and pH. Other details of coagulation step are described in European Patent Application No. EP 1 111 001 A2.

The cationic surfactant and emulsion polymer mixture is isolated as a coagulated slurry (also referred to as a coagulate) from an aqueous dispersion, then subsequently filtered and dried. The resulting coagulated slurry has a percent solids weight fraction of from 1 to 60 percent, including from 5 to 40 percent and from 5 to 20 percent. It is desirable to ensure that the emulsion polymer dispersion is completely coagulated in the resulting coagulated slurry. This is accomplished using additional amounts of more concentrated surfactant solution and/or electrolyte solution, typically from 5 to 40 percent by weight, based on the weight of the aqueous solution. It is desirable to use higher concentrations of coagulant to minimize the amount of excess water added in the process just prior to the drying step.

The resulting coagulated slurry has a mean slurry particle size from 1 to 1000 microns, including from 150 to 400 microns. It is also desirable that the slurry particle size distribution is narrow to avoid the presence of dust from very small polymer powder particles and the presence of undesirably large slurry particles. The particle size distribution span (termed "span") is defined as span = $(d_{90}-d_{10})/d_{50}$, wherein $d_x$ is the particle diameter in the particle size distribution below which x%, based on volume, of the total particles reside in the distribution.

The resulting coagulated slurry is dried to less than 5 weight percent water to form a free flowing powder. Various methods of drying polymer particle slurries are well known to persons having skill in the art and are described in *Chemical Engineer's Handbook, 5th Ed., Perry and Chilton, Eds., 1973* which relates to the drying of solid-liquid particle dispersions. Conventional drying techniques include but are not limited to fluidized bed drying, rotary drying, spray drying, continuous or batch tray drying, flash drying, and pneumatic conveyor drying. The drying technique usefully employed according to the invention will vary depending on the nature of the coagulated slurry, the polymer, the surfactant(s) utilized as a coagulant and combinations thereof. During the drying step it is useful to control the temperature so that the slurry particles do not fuse among themselves, for example by keep the temperature of the slurry particles below the Tg of the outer shells of the polymer components (also referred to as the hard components).

The drying step may proceed in one step or in multiple steps. Multiple step drying is used to remove a sufficient amount of water from the resulting coagulated slurry to form a wetcake, the wetcake having less than 60 weight percent water. Wetcake is prepared according to methods well known in the art, for example by filtration of the slurry using a vacuum filter belt, a centrifuge, a Buchner funnel and the like.

One advantage of cationic surfactant promoted coagulation of the emulsion polymers over spray drying the emulsion polymers is that spray drying requires large amounts of energy to vaporize the liquid component of the latex polymer dispersion. The aqueous emulsion polymer dispersion or concentrate is coagulated with one or more cationic surfactants to form a coagulate (also referred to as a coagulated slurry) in the process of the invention. Coagulation methods of the present invention utilize one or more cationic surfactants and cationic surfactants in combination with one or more other coagulants including salts, acids and other surfactants to agglomerate the polymer latex, thereby avoiding high energy costs of spray drying.

Coagulation of emulsion polymer dispersions using conventional coagulants known in the art including salts and acids, however, introduces impurities in the dried polymer powders such as salts, acids, unreacted monomers, monomer impurities, solvents, oligomers, chain transfer agents, catalysts and the like. One advantage of coagulation of the emulsion polymers using cationic surfactants of the invention is that impurities are minimized. Coagulation requires an additional drying step to remove residual liquid from the coagulated products. Minimizing the amount of these impurities is important since the impurities may impart undesirable taste and odor and could be hazardous when the polymer particles produced are employed in packaging for food, pharmaceuticals, cosmetics, personal care products and the like. Various methods such as chemical treatment, thermal de-volatilization, and vacuum extraction have been employed to remove low molecular weight impurities from polymeric materials and latexes, often called emulsions or suspensions, which contain polymeric materials.

The coagulation process of the invention provides satisfactory control over the size, shape and bulk densities of the polymer particles and powders produced. Also, polymeric particles and polymer powders produced by the coagulation process of the invention are spherical in shape and exhibit a narrow particle size distribution, as coagulated powders produced are observed to be comparatively more free-flowing, less dusting and exhibit higher bulk densities, respective to emulsions coagulated and dried or dried in the absence of surfactants.

Polymer particles and powders that are formed by the processes of the invention have a tighter pore structure and may have higher density relative to particles produced by conventional processes such as spray drying or salt promoted coagulation described above. The tighter pore structure of the particles produced by the process of the invention may enable the particles to be employed in applications which require higher packing densities.

According to one embodiment of the invention, the aqueous polymer dispersion has a percent solids weight fraction in the range of from 2% to 70% by weight, including from 5% to 60%, and including from 10% to 50%. These percent solids weight fraction ranges can be achieved by blending one or more impact modifiers (IM) and one or more processing aids (PA) particle dispersions each having the desired solids weight fraction, or having the desired weight fraction when combined. Accordingly, the solids weight fractions of each IM and PA particle dispersion is in the range of from 2% to 70% by weight, including from 5% to 60%, and most preferably from 10% to 50%. In addition, the IM and first PA polymer dispersions can be prepared at particularly high percent solids weight fraction and subsequently diluted to achieve a preferred lower percent solids weight fraction. It is also possible to dilute the first aqueous particle dispersion to achieve a preferred lower percent solids concentration for the subsequent coagulation step.

According to a separate embodiment of the invention, the aqueous polymer dispersion may also contain up to 5 percent by weight of a dispersion of flow aid polymer particles, such as those described in U.S. Patent No. 4,463,131 and European Patent Publication No. EP 1 201 692 A1.

According to a separate embodiment of the invention, reduction of low molecular weight impurities in a polymer dispersion prior to coagulating the polymer particles contained therein is accomplished using a purification process as described in European patent publication No. EP 0 442 679 A1. In accordance with the embodiment, impurities are removed from a polymer dispersion or coagulated dispersion by treating the dispersion with high pressure solvent selected from liquified gas or supercritical gas. Suitable gases include carbon dioxide, nitrous oxide, ethane, ethylene, propylene, propane, fluorocarbons such as dichlorodifluoromethane, chlorodifluoromethane, dichlortetrafluroethane, and the like. The high pressure solvent also may be chosen so as to coagulate the polymer dispersion, especially into particles with substantially uniform particle size distribution and spherical shape. Additional components can be admixed with the high pressure solvent to control the rate of coagulation of the polymer dispersion and to promote removal of polar impurities from the particles so formed. This may be conducted so as to yield a resultant polymer dispersion or coagulated dispersion wherein polymer particles are substantially free from low molecular weight impurities such as residual monomers, diluents, solvents and aqueous-borne impurities. In addition, when the invention is used to promote coagulation of the polymer dispersion, resultant particles may be substantially spherical in shape and of narrow size distribution

The invention provides manufacturing process for preparing polymeric granules that are comparatively non-dusting solids, that are flowable powders and that have desired rheology and mechanical properties for incorporating into compositions and formulations including those used in personal care, cosmetic, consumer, and pharmaceutical products. Inventors have additionally discovered a process for manufacturing dry polymer granules that exhibit no decrease in powder bulk density and provides polymer powders having larger mean particle size with a small distribution of fines. In the process, latex polymer dispersions are coagulated with one or more cationic surfactants to achieve non-dusting polymer solids (particles, powders) that are flowable, having desirable rheology and powder properties. Moreover, the granulated solids exhibit increased MIE, lowered or unchanged MEP and lowered Kst values such that they can be safely processed, manipulated and stored.

In one embodiment, the invention provides a process for manufacturing a dry polymer composition having reduced dusting levels comprising the steps of: (a) coagulating one or more emulsion polymer dispersions with one or more cationic surfactants and (b) drying the coagulated slurry to achieve a polymer powder particle size ranging from 1 μm to 1000 μm. According to a separate embodiment, an additional filtration step is included after coagulating the one or more emulsion polymer dispersions with one or more cationic surfactants.

In a separate embodiment, the invention provides a process for preparing flowable, dry polymer solids having reduced dusting levels comprising: coagulating one or more emulsion polymers with one or more cationic surfactants and drying the coagulated slurry to achieve dry, flowable polymer solids having increased MIE, low MEP and lowered Kst values.

In a separate embodiment, the invention provides flowable, dry polymer solids having reduced dusting levels comprising: (a) one or more emulsion polymers and (b) one or more cationic surfactants; wherein the polymer composition is prepared by coagulating a dispersion comprising (a) and (b); and drying the coagulated slurry; wherein dry, flowable polymer solids having increased particle size, no decrease in bulk density, lowered or unchanged MEP and lowered Kst values result from spray drying of an aqueous dispersion of the combination of emulsion polymer and surfactant.

In a separate embodiment, the invention provides a process for preparing flowable, non-dusting polymer solids, comprising the steps of:

(a) preparing a first aqueous polymer dispersion including one or more emulsion polymers;

(b) coagulating the first aqueous polymer dispersion with one or more cationic surfactants, including one or more cationic surfactants in combination with one or more coagulating agents to form a coagulated slurry;

(c) adding a second aqueous polymer dispersion including one or more emulsion polymers to the coagulated slurry; and

(d) drying the coagulated slurry to form free flowing polymer solids;

wherein resulting polymer solids having increased particle size, increased MIE, lowered or unchanged MEP and lowered Kst values.

In accordance with the embodiment involving different polymer dispersions, it is also important to control the coagulation temperature because too high a coagulation temperature results in excessively large particles causing poor dispersion. In contrast, too low a temperature results in excessively small particles resulting in a wide particle size span and excessive dust. Coagulation temperature varies with the latex composition, particle size, emulsifier type, and pH. For example, when a first aqueous polymer dispersion contains acrylic-based IM polymer particles having greater than 88% rubber, the coagulation temperature is in the range of from 0°C to 45°C, preferably in the range from 0°C to 20°C. In contrast, when the first aqueous particle dispersion contains acrylic-based IM polymer particles having less than 88% rubber, the coagulation temperature can be as high as 85°C, but preferably less than 70°C. The resulting coagulated slurry should have a percent solids weight fraction in the range of from 1% to 60% by weight, including from 5% to 40%, and including from 5% to 20%.

As used herein, combinations of two polymer populations which vary in particle size are describable using three main variables: weight percent of large population "mode", particle size of the large mode, and particle size of small mode. Diameter Ratio (DR) is equal to the diameter of the large mode (Dlarge) divided by the diameter of the smaller mode (Dsmall). From a theoretical standpoint the optimum value of DR for maximizing packing density ranges from 7 to 10.

As used herein, maximum explosion pressure (MEP) is referred to as the difference between the pressure at ignition time (ambient pressure) and the pressure at culmination point of explosion. Both the MEP and explosion severity values (Kst value) were measured in a 20 liter apparatus or in a 1 m$^3$ vessel at different polymer powder (fuel) concentrations according to test conditions specified in ISO 6184/1 (1995) and ASTM Standard E1226 (1991). All measurements were performed by Chilworth Technology, Inc., Monmouth Junction, New Jersey. The test is done over a wide range of concentrations in each case a maximum pressure value is obtained. Minimum ignition energy (MIE) is the lowest electrically induced ignition energy obtained by means of a capacitive discharge which is able to produce ignition of a polymer dust cloud. The test device used was a Hartmann Vertical Tube of 1 liter volume and the measurements were performed according to ASTM E-2019 Standard Test method, British standard method BS 5958: part 1 (1991), or Fortschritt-Berichte VDI, Reihe 3: Verfahrentechnik Nr 134, Germany. The energy is calculated from the equation $E = \frac{1}{2} CV^2$, where C is the electrical capacitance of the capacitors connected to the discharge circuit and V is the electrical voltage applied.

In providing dry flowable powders that are non-dusting by coagulating polymer particle dispersions with one or more cationic surfactants, it is desirable that the viscosity of polymer particle dispersion be less than 2000 centipoise. In a separate embodiment, the viscosity of polymer particle dispersion is less than 1200 centipoise. These viscosities are measured using a Brookfield viscometer with a #3 spindle operating at 30 RPM. Polymer particle dispersions which have viscosities greater than 2000 centipoise can be suitably diluted, such as by addition of an aqueous liquid, to reduce the viscosity to 2000 centipoise or less.

Addition of one or more cationic surfactants to a dispersion of one or more emulsion polymers coagulates the polymer dispersion and the dried coagulate or coagulated slurry unexpectedly provides flowable solids having suitable rheology, mechanical properties and that are relatively non-dusting as compared to polymer powders prepared from polymer dispersions including no cationic surfactants.

In the present invention, a typical polymer powder particle population has a mean particle diameter less than 1000 microns. In a separate embodiment, the polymer powder particle population typically has a mean particle diameter less than 800 microns. In a separate embodiment, the polymer powder particle population typically has a mean particle diameter less than 500 microns. In yet another separate embodiment, the polymer powder particle population typically has a mean particle diameter greater than 1 micron.

The coagulated polymer powders of the present invention have a mean particle diameter of at least 1 micron. In one embodiment the coagulated powders of the present invention are characterized by having a mean particle diameter of between 75 and 500 microns. In a separate embodiment the coagulated powders of the present invention are characterized by having a mean particle diameter of between 75 and 800 microns. Powder particles larger than 1000 microns are typically undesirable, and are subsequently filtered out of the powdery polymer product.

The coagulated powders of the present invention are characterized as free-flowing and low to no-dust. Typically, these powder properties are achieved when the water content is typically less than 5 weight percent. In one embodiment, these powder properties are achieved when the water content is between 0.5 to 2.0 weight percent.

One variation of the present invention includes adding one or more known plastic additive compositions, in either powder or aqueous form. These additives can be optionally blended into the composition before, during, or after the coagulation step using standard equipment such as high-speed mixers, blenders, kneaders, extruders, fluidized drying beds. Other ingredients typically blended in thermoplastic formulations, such as lubricants, thermal stabilizers, waxes, dyes, pigments, fillers, may each have an aqueous solution, liquid, powdered, or pellet form, and may also be included in the compositions of the present invention using this mixing equipment.

When the polymer particle dispersion used in the coagulation step is in an emulsion form, the dispersion may further contain emulsifiers, stabilizers, ionic salts, acid or base, oligomeric species and additional surfactants. In an emulsion form, the polymer particles are typically synthesized by an emulsion process or prepared by an alternative polymerization process and then subsequently emulsified. More typically, the polymer particles are prepared using emulsion polymerization techniques using various ethylenically unsaturated monomers such as those based on acrylics, dienes, vinyl-halides, vinyl aromatics, ethylenevinyl acetates, and combinations thereof.

As used herein the term "rubbery" used herein denotes the thermodynamic state of a polymer above its glass transition temperature. The term "stage" used herein is intended to encompass its broadest possible meaning, including the meaning conveyed in prior art such as in U.S. Patent 3,793,402; U.S. Patent 3,971,835; U.S. Patent 5,534,594; and U.S. Patent 5,599,854; which offer various means for achieving "staged" polymers. The term "parts" used herein is intended to mean "parts by weight". Unless otherwise stated, "total parts by weight" do not necessarily add to 100. The term "weight percent" used herein is intended to mean "parts per hundred by weight" wherein the total parts add to 100. The term "weight fraction" used herein is synonymous with "weight percentage", when it is evident that the total parts described add to 100. The term "solids weight fraction" used herein is intended to mean the weight percentage of the dried residue based on the total weight of an aqueous particle dispersion that is dried to constant weight. The term "particle size" used herein refers to the mean particle diameter of a population of particles. The term "mode" used herein refers to a particular population of particles as in "large mode" and "small mode". The term "core-shell" used herein refers to polymer particles which typically have at least one outer polymer phase externally situated adjacent to an inner polymer phase; the outer phase may be situated as a single phase (shell) or as multiple phases (islands) on the inner polymer phase (core). The use of the term "first population" and "second population" as used herein is merely used for the sake of convenience in identifying two different populations of polymer particles and has no connotation relating to process order. As used herein, the term "compaction-free" refers to powdery compositions which are not compactable into a single mass by manually squeezing a handful of the powdery composition. The Fox Equation as used herein is: $1/Tg = a/Tg(A) + b/Tg(B) + c/Tg(C) + ...$ wherein a, b, c, etc. refer to the weight fraction of monomeric components A, B, C, etc. respectively, and Tg(A), Tg(B), Tg (C), etc. refer to the glass transitions for the homopolymers derived from monomers A, B, C, etc., expressed in degrees Kelvin. These glass transition temperatures are defined according to the results obtained using differential scanning calorimetry (DSC) in the high molecular weight limit.

Compositions and formulations incorporating the dry polymer solids of the invention prepared by the method of this invention may be applied to the skin at coating volumes, for example, of from about 0.5 microliters per square centimeter ($\mu L/cm^2$) to about 4 $\mu L/cm^2$.

Some embodiments of the invention are described in detail in the following Examples. All ratios, parts and percentages are expressed by weight unless otherwise specified, and all reagents used are of good commercial quality unless otherwise specified. The following abbreviations are used in the Examples:

| | |
|---|---|
| MMA = | Methyl Methacrylate |
| BMA = | Butyl Methacrylate |
| ALMA = | Allyl Methacrylate |
| MAA = | Methacrylic Acid |
| DVB = | Divinylbenzene (80% active, 20% ethylvinylbenzene) |
| Sty = | Styrene |
| SSS = | Sodium Styrene Sulfonate |
| AAEM = | Acetoacetoxyethyl Methacrylate |
| SDBS = | Sodium Dodecylbenzenesulfonate |
| TMPTA = | Trimethylolpropane Triacrylate |
| TEGDA = | Tetraethyleneglycol Diacrylate |
| PBW = | Parts by Weight |
| XL = | Crosslinker |
| NA = | Not Analyzed |
| MFM = | Multifunctional Monomer |

Latex polymer particles and core shell polymer dispersions described in Example 1 were prepared similarly to the method described in U.S. Patent Nos. 4,427,836 and 6,384,104. Core polymers typically had an average particle diameter of 90 to 150 nm (or 0.09 to 0.15 $\mu$). Polymer #34 was selected as a representative polymer containing no surfactant used as a control and was identified as sample 1. Sample 1 was combined with a conventional electrolyte coagulating agent calcium chloride in an amount up to 3 percent by weight and used as a comparative (sample 2). Sample 1 was combined with a specific cationic surfactant hexadecyltrimethylammonium chloride as a coagulating agent (sample 3).

Examples (Preparation of samples 1-3 and coagulation of samples 2 and 3)

A core shell emulsion polymer (#34 was prepared according to the method described in U.S. Patent No 6,384,104) was used as a control identified as sample 1. An aqueous dispersion of the polymer was prepared as a control by dilution with water so that it contained 30 wt. % polymer solids (sample 1). Sample 2 was prepared by diluting a mixture of sample 1 with water 97:3 on a weight percent basis so that it contained 27 wt. % polymer solids and was coagulated using 3 wt. % (as solids) solution of calcium chloride in a conventional electrolyte promoted coagulating process. The total amount of slurry solids was 10 % by weight. Sample 3 was prepared by diluting a mixture of sample 1 with water 97:3 on a weight percent basis so that it contained 27 wt. % polymer solids and was coagulated using 0.5 wt. % (as solids) solution of a commercially available cationic surfactant, hexadecyltrimethylammonium chloride, as a coagulant. The total amount of slurry solids was 10 % by weight.

Sample 1 was spray dried as a control using a Niro™ Pilot Spray Dryer (Model P6.3). The spray dryer was equipped with a standard vaned wheel atomizer. The drying conditions are characterized by a feed rate of 35 to 40 lbs/hr (15.7 to 16.9 kg/hr) of liquid, a wheel speed of 9,600 rpm and a final overall powder moisture level between 0.7 to 0.9 weight percent. The control sample 1 was isolated as free flowing solids, however, it also exhibited high dusting levels. Coagulation of samples 2 and 3 were performed using conventional laboratory scale coagulation equipment used to determine the feasibility of a commercial scale coagulation process. Key variables measured were coagulation time, polymer particle size distribution versus coagulation conditions, filtration behavior (both filtration rate and final moisture content of the filtered slurry) and drying conditions. Coagulation conditions were as follows: Coagulation temperature was maintained at 90° C. Cooker temperature was maintained at 95° C. De-ionized (DI) water wash ratio of 1:1 (DI water: polymer solids) was employed. Polymer emulsion coagulated using electrolyte promoted coagulation (sample 2) was difficult to coagulate. The resulting particle size of the slurry had a large population of fines (solids having a mean particle size < 10 μm). The slurry was also difficult to filter and wash. The filtered slurry was dried at 35° C. Final solids agglomerated poorly when the wet slurry cake was dried. A Waring blender was used to grind the final dried sample. Polymer emulsion coagulated using a cationic surfactant coagulant (sample 3) was processed to dry polymer solids using a the same procedure. A free flowing, low dusting polymer powder having was produced for sample 3. The dried coagulated solids were screened through an ASTM 20 mesh (850 micron) screen. A compaction-free powder was evident for samples 1 and 3 with and without cationic surfactant respectively, as the resulting powders did not stick together in a solid mass when hand-squeezed.

The moisture levels of samples 1-3, measured as a weight percent, was between 0.5 to 2.0. Sample 1 clearly exhibited significant dusting from visual inspection and from measured powder properties described above. Sample 2 was poorly agglomerated after coagulation, filtering and drying. Only sample 3 exhibited markedly lower dusting levels, a higher MIE, a MEP that did not increase significantly relative to the control, and markedly lowered Kst values as compared to control sample 1.

The Examples clearly show that coagulating dispersions of one or more emulsion polymers described herein with one or more cationic surfactants (sample 3) including one or more other coagulating agents is an effective manufacturing process for markedly lowering the dusting levels and markedly raising the MIE of such polymer particulates and powders. Free-flowing polymer powder particles can be safely processed by virtue of lowered explosion strength (Kst) and increased MIE, as compared to their respective polymers in the absence of said surfactants. Coagulation of the polymer dispersions containing one or more cationic surfactants including one or more other coagulating agents, as usefully employed in accordance with the present invention, offers the advantages of rendering the dry polymer solids free flowing while obviating the problem of dusting, not increasing the MEP, lowering the Kst values and increasing the MIE for such polymer solids and provides a process for the safe and efficient manufacture of dried polymer solids that could not be safely handled by spray drying in the absence of such surfactants.

**Claims**

1. A process for manufacturing a dry polymer composition having reduced dusting comprising the steps of: (a) coagulating one or more emulsion polymers with one or more cationic surfactants and (b) drying the coagulate.

2. The process according to claim 1, wherein the dry polymer composition exhibits increased minimum ignition energy and lower explosion strength values as compared with a respective polymer composition comprising no surfactant.

3. The process according to claim 1, wherein the cationic surfactants are used in combination with one or more other coagulating agents selected from the group consisting of metal salts, metal salts of organic compounds, organic acids, inorganic acids, non-ionic surfactants, zwitterionic surfactants and combinations thereof.

4. The process according to claim 1, wherein the cationic surfactants are selected from $(C_{12}-C_{20})$amine compounds, lauryl pyridinium chloride, octylbenzyltrimethylammonium chloride, hexadecyltrimethylammonium chloride, hexadecyltrimethylammonium bromide, dodecyltrimethylammonium chloride, oxygen containing amines, quaternary amine salts and esters of quaternary amine salts.

5. The process according to claim 1, wherein the emulsion polymer is prepared from latex polymer particles comprising a shell portion prepared by one or more steps selected from: (i) polymerization to incorporate from 4 to 80 percent monomeric units, based on total weight of the shell portion, of one or more polyethylenically unsaturated monomers; and (ii) polymerization to incorporate from 4 to 80 percent monomeric units, based on total weight of the shell portion, of one or more multifunctional monomers having at least one functional group capable of vinyl copolymerization and at least one functional group capable of reaction with a reactive molecule effective to produce post-polymerization cross-linking.

6. A polymer composition having reduced dusting comprising: (a) one or more emulsion polymers and (b) one or more cationic surfactants; wherein the polymer composition is prepared by coagulating a dispersion comprising (a) and (b); and drying the coagulated slurry.

7. Polymer composition according to claim 6, wherein the coagulated polymer composition exhibits increased minimum ignition energy and lower explosion strength values as compared with a respective polymer composition comprising no surfactant.

8. Polymer composition according to claim 6, wherein the emulsion polymer is prepared from latex polymer particles comprising a shell portion prepared by one or more steps selected from: (i) polymerization to incorporate from 4 to 80 percent monomeric units, based on total weight of the shell portion, of one or more polyethylenically unsaturated monomers; and (ii) polymerization to incorporate from 4 to 80 percent monomeric units, based on total weight of the shell portion, of one or more multifunctional monomers having at least one functional group capable of vinyl copolymerization and at least one functional group capable of reaction with a reactive molecule effective to produce post-polymerization cross-linking.

9. A composition according to claim 6, wherein the resulting dry polymer solids are incorporated into compositions and formulations selected from the group consisting of personal care, cosmetic, consumer, pharmaceutical products and combinations thereof.

10. Polymer composition according to claim 6, wherein the cationic surfactants are used in combination with one or more other coagulating agents selected from the group consisting of metal salts, metal salts of organic compounds, organic acids, inorganic acids, non-ionic surfactants, zwitterionic surfactants and combinations thereof to agglomerate the one or more emulsion polymers.

**European Patent Office**

**EUROPEAN SEARCH REPORT**

Application Number

EP 04 25 4773

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 569 991 A (FUJINO KIYOHARU) 11 February 1986 (1986-02-11) * claims 1,5 * | 1-10 | B29B9/08 C08J3/12 C08J3/16 C08J3/205 |
| X | DATABASE WPI Section Ch, Week 199040 Derwent Publications Ltd., London, GB; Class A14, AN 1984-254515 XP002307138 & JP 02 040086 B (MITSUBISHI MONSANTO KK) 10 September 1990 (1990-09-10) * abstract; claim 1 * | 1 | |
| X | DATABASE WPI Section Ch, Week 197909 Derwent Publications Ltd., London, GB; Class A14, AN 1974-68597V XP002307139 & JP 54 002224 B (DAIKIN KOGYO KK) 3 February 1979 (1979-02-03) * abstract; claim 1 * | 1 | TECHNICAL FIELDS SEARCHED (Int.Cl.7) B29B C08J |

The present search report has been drawn up for all claims

| Place of search | Date of completion of the search | Examiner |
|---|---|---|
| The Hague | 23 November 2004 | Hillebrand, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 04 25 4773

This annex lists the patent family members relating to the patent documents cited in the above-mentioned European search report.
The members are as contained in the European Patent Office EDP file on
The European Patent Office is in no way liable for these particulars which are merely given for the purpose of information.

23-11-2004

| Patent document cited in search report | | Publication date | Patent family member(s) | | Publication date |
|---|---|---|---|---|---|
| US 4569991 | A | 11-02-1986 | JP | 1667328 C | 29-05-1992 |
| | | | JP | 3029812 B | 25-04-1991 |
| | | | JP | 58128112 A | 30-07-1983 |
| | | | JP | 1053882 B | 16-11-1989 |
| | | | JP | 1568007 C | 10-07-1990 |
| | | | JP | 58194907 A | 14-11-1983 |
| | | | JP | 1623743 C | 18-11-1991 |
| | | | JP | 2047482 B | 19-10-1990 |
| | | | JP | 59022905 A | 06-02-1984 |
| | | | BR | 8300366 A | 25-10-1983 |
| | | | CA | 1235547 A1 | 19-04-1988 |
| | | | DE | 3380411 D1 | 21-09-1989 |
| | | | EP | 0084837 A1 | 03-08-1983 |
| | | | ES | 8403146 A1 | 01-06-1984 |
| | | | US | 4581444 A | 08-04-1986 |
| JP 2040086 | B | 10-09-1990 | JP | 1612247 C | 30-07-1991 |
| | | | JP | 59155402 A | 04-09-1984 |
| JP 54002224 | B | 03-02-1979 | JP | 969151 C | 31-08-1979 |
| | | | JP | 49025041 A | 06-03-1974 |

EPO FORM P0459

For more details about this annex : see Official Journal of the European Patent Office, No. 12/82